# EUROPEAN PATENT APPLICATION

(11) **EP 4 814 688 A1**
(43) Date of publication of application: **30.09.2026**
(21) Application number: 25197215.4
(22) Date of filing: 21.08.2025
(51) Int. Cl.: G06F 3/12, G06T 15/50

(54) **INFORMATION PROCESSING SYSTEM, PROGRAM, AND INFORMATION PROCESSING METHOD**

(30) Priority: 24.03.2025 JP 2025048549; 25.03.2025 JP 2025050668; 26.03.2025 JP 2025050915
(71) Applicant: FUJIFILM Business Innovation Corp., Minato-ku Tokyo (JP)
(72) Inventor: TAKAISHI, Shinya, Yokohama-shi, Kanagawa (JP); ARIEDA, Kota, Yokohama-shi, Kanagawa (JP); NISHIKUNI, Yuichi, Yokohama-shi, Kanagawa (JP)
(74) Representative: Becker Kurig & Partner Patentanwälte mbB

(57) **Abstract**

An information processing system includes: a processor configured to: execute control of receiving a designation of a light source for observation; execute control of acquiring an environment map of the light source; execute control of acquiring a background image having a color temperature equivalent to a color temperature of the environment map; execute control of generating a simulation image that reproduces appearance of printed matter using the acquired environment map; and execute control of displaying the simulation image by combining the simulation image with the background image.

## Description

### BACKGROUND OF THE INVENTION

### (i) Field of the Invention

The present invention relates to an information processing system, a program, and an information processing method.

### (ii) Description of Related Art

There is a technique of displaying, before printing, a preview of appearance of printed matter in a real space.

### SUMMARY OF THE INVENTION

In generating a preview image, there is a simulator that can designate a light source of a space in which printed matter is observed. However, appearance of the printed matter is also affected by a background. Therefore, the appearance of the printed matter whose preview is displayed may not necessarily match the appearance in a real environment.

An object of the present invention is to make appearance of a simulation image that reproduces appearance of printed matter closer to appearance of a real environment as compared to a case of generating the simulation image using only light source information of a space to be observed.

According to a first aspect of the present disclosure, there is provided an information processing system including: a processor configured to: execute control of receiving a designation of a light source for observation; execute control of acquiring an environment map of the light source; execute control of acquiring a background image having a color temperature equivalent to a color temperature of the environment map; execute control of generating a simulation image that reproduces appearance of printed matter using the acquired environment map; and execute control of displaying the simulation image by combining the simulation image with the background image.

According to a second aspect of the present disclosure, in the information processing system according to the first aspect, the processor may be configured to: acquire, as the background image, an image having a color temperature equivalent to a color temperature of a main light source of the environment map.

According to a third aspect of the present disclosure, in the information processing system according to the second aspect, the processor may be configured to: execute control of determining a light source having maximum brightness in the environment map as the main light source.

According to a fourth aspect of the present disclosure, in the information processing system according to the second aspect, the processor may be configured to: execute control of determining an average color temperature of a plurality of light sources included in the environment map as a color temperature of the light source.

According to a fifth aspect of the present disclosure, in the information processing system according to any one of the first to fourth aspects, the processor may be configured to: execute control of determining the color temperature of the background image based on an average color temperature of a main light source included in the background image.

According to a sixth aspect of the present disclosure, in the information processing system according to any one of the first to fifth aspects, the processor may be configured to: execute control of determining the color temperature of the background image based on an average color temperature of a plurality of light sources included in the background image.

According to a seventh aspect of the present disclosure, in the information processing system according to any one of the first to sixth aspects, the processor may be configured to: acquire, as the background image, an image having a color temperature of approximately 5700 K to 7100 K in a case where daylight color is designated for the light source; acquire, as the background image, an image having a color temperature of approximately 4600 K to 5500 K in a case where neutral white is designated for the light source; acquire, as the background image, an image having a color temperature of approximately 3800 K to 4500 K in a case where white is designated for the light source; acquire, as the background image, an image having a color temperature of approximately 3250 K to 3800 K in a case where warm neutral white is designated for the light source; and acquire, as the background image, an image having a color temperature of approximately 2600 K to 3250 K in a case where warm white is designated for the light source.

According to an eighth aspect of the present disclosure, in the information processing system according to any one of the first to seventh aspects, the processor may be configured to: acquire, as the background image, an image in which a shape of at least one light source that is reflected behind the printed matter is similar to a shape of the light source in the environment map.

According to a ninth aspect of the present disclosure, in the information processing system according to any one of the first to eighth aspects, the processor may be configured to: execute control of displaying options in which the light source for observation and the background image are combined.

According to a tenth aspect of the present disclosure, in the information processing system according to the ninth aspect, the options may include at least one of a color temperature of the light source for observation, a shape of the light source, or a name of a location of a background.

According to an eleventh aspect of the present disclosure, in the information processing system according to any one of the first to tenth aspects, the processor may be configured to: receive a designation of a name of a location of the background image, in addition to the designation of the light source for observation.

According to a twelfth aspect of the present disclosure, in the information processing system according to the eleventh aspect, the processor may be configured to: in a case of receiving a designation of the background image by selecting the name of the location, execute control of not displaying a color temperature different from a color temperature associated with the name of the location as an option or displaying the color temperature in a non-selectable mode.

According to a thirteenth aspect of the present disclosure, there is provided a program for causing a computer to implement: a function of receiving a designation of a light source for observation; a function of acquiring an environment map of the light source; a function of acquiring a background image having a color temperature equivalent to a color temperature of the environment map; a function of generating a simulation image that reproduces appearance of printed matter using the acquired environment map; and a function of displaying the simulation image by combining the simulation image with the background image.

According to a fourteenth aspect of the present disclosure, there is provided an information processing method including: receiving a designation of a light source for observation; acquiring an environment map of the light source; acquiring a background image having a color temperature equivalent to a color temperature of the environment map; generating a simulation image that reproduces appearance of printed matter using the acquired environment map; and displaying the simulation image by combining the simulation image with the background image.

According to the first aspect of the present disclosure, it is possible to make appearance of a simulation image that reproduces appearance of printed matter closer to appearance of a real environment as compared to a case of generating the simulation image using only light source information of a space to be observed.

According to the second aspect of the present disclosure, it is possible to make the appearance of the simulation image closer to reality even in a case where the environment map includes a plurality of light sources.

According to the third aspect of the present disclosure, it is possible to make the appearance of the simulation image closer to the appearance in reality.

According to the fourth aspect of the present disclosure, it is possible to make the appearance of the simulation image closer to the appearance in reality.

According to the fifth aspect of the present disclosure, it is possible to make the appearance of the simulation image closer to the appearance in reality.

According to the sixth aspect of the present disclosure, it is possible to make the appearance of the simulation image closer to the appearance in reality.

According to the seventh aspect of the present disclosure, it is possible to make the observation environment of the simulation image closer to a real space.

According to the eighth aspect of the present disclosure, it is possible to eliminate inconsistency between a shape of the light source and a shape of the light source appearing in the background image.

According to the ninth aspect of the present disclosure, it is possible to designate an observation environment in which the light source and the background image are combined.

According to the tenth aspect of the present disclosure, it is possible to designate the observation environment in detail before the execution of the simulation.

According to the eleventh aspect of the present disclosure, it is possible to designate the observation environment in detail before the execution of the simulation.

According to the twelfth aspect of the present disclosure, it is possible to prevent erroneous designation in advance.

According to the thirteenth aspect of the present disclosure, it is possible to make appearance of a simulation image that reproduces appearance of printed matter closer to appearance of a real environment as compared to a case of generating the simulation image using only light source information of a space to be observed.

According to the fourteenth aspect of the present disclosure, it is possible to make appearance of a simulation image that reproduces appearance of printed matter closer to appearance of a real environment as compared to a case of generating the simulation image using only light source information of a space to be observed.

### BRIEF DESCRIPTION OF THE DRAWINGS

Exemplary embodiment(s) of the present invention will be described in detail based on the following figures, wherein:
FIG. 1 is a diagram illustrating a configuration example of a printing system;
FIG. 2 is a diagram illustrating an example of a hardware configuration of a controller;
FIG. 3 is a diagram illustrating a functional configuration of the controller;
FIG. 4 is a diagram illustrating an example of a display process of a preview image;
FIG. 5 is a diagram illustrating a display example of a simulation image based on an initial orientation;
FIG. 6 is a diagram illustrating an example of options prepared in an observation environment;
FIG. 7 is a diagram illustrating a display example of an image field after an operation of a "display update" button;
FIG. 8 is a diagram illustrating another display example of an image field after an operation of a "display update" button;
FIG. 9 is a diagram illustrating an outline of a method of acquiring a background image;
FIG. 10 is a diagram illustrating a method of determining a background image in a case where a color temperature of an environment map is set to a color temperature of a main light source;
FIG. 11 is a diagram illustrating a display example of a preview screen in which a simulation image of printed matter is combined with a background image;
FIG. 12 is a diagram illustrating a method of determining a color temperature in a case where a plurality of light sources are present in an environment map;
FIG. 13 is a diagram illustrating another display example of a preview screen in which a simulation image of printed matter is combined with a background image;
FIG. 14 is a diagram illustrating another method of determining a color temperature in a case where a plurality of light sources are present in an environment map;
FIG. 15 is a diagram illustrating a method of determining a color temperature of a background image based on an average color temperature of a plurality of light sources included in the background image;
FIG. 16 is a diagram illustrating another method of determining a color temperature in a case where a plurality of light sources are present in an environment map;
FIG. 17 is a diagram illustrating an example in which a selection field for "name of location" and a selection field for "color temperature of light source" are separately prepared; and
FIG. 18 is a diagram illustrating a display example of options in which "name of location", "color of light source", and "shape of light source" are combined.

### DETAILED DESCRIPTION OF THE INVENTION

Hereinafter, exemplary embodiments of the present invention will be described with reference to the accompanying drawings.

### <Term>

Printed matter refers to any paper or other flat media paper on which text or images are printed.

Media used for printing include, for example, unprocessed paper and processed paper. The processed paper includes, for example, glossy paper, coated paper, matte paper, and special paper. The special paper includes, for example, paper subjected to foil stamping and paper containing glitter.

An image forming apparatus refers to an apparatus that inputs print data and that outputs printed matter. The image forming apparatus may be referred to as a printing apparatus in the sense of an apparatus that outputs printed matter.

The image forming apparatus is not limited to an apparatus dedicated to printing. In addition, the image forming apparatus includes an apparatus for commercial use (for example, also referred to as a "production printer") and an apparatus for office use (for example, also referred to as a "copy machine" or a "multifunction machine"). Printing methods used in the image forming apparatus include, for example, an electrophotographic method, an inkjet method, and an offset printing method.

The print data refers to data to be input to the image forming apparatus. The print data may be, for example, page description language (PDL) data or bitmap data. The PDL data is described in a vector format. Meanwhile, the bitmap data is described in units of pixels.

The print data includes color information. The color information includes, for example, yellow (Y), magenta (M), cyan (C), black (K), and special colors. The special colors include, for example, a metallic color (for example, silver or gold) and a color other than YMCK. The special colors may include, for example, information on the presence or absence of foil stamping, a type of foil stamping, and a position of foil stamping.

A light source refers to a light-emitting body used for observing printed matter. Examples of the light source include a natural light source and an illumination light source. The natural light source includes, for example, the sun and the moon. The illumination light source includes, for example, a light bulb, a fluorescent lamp, and a light emitting diode (LED) light source.

In addition, the light source is classified into a point light source, a plane light source, a parallel light source, and a line light source. In addition, light source color is classified into, for example, warm white, warm neutral white, white, neutral white, and daylight color. The light source color may be represented in terms of a color temperature.

### <Exemplary Embodiment 1>

### <System Configuration>

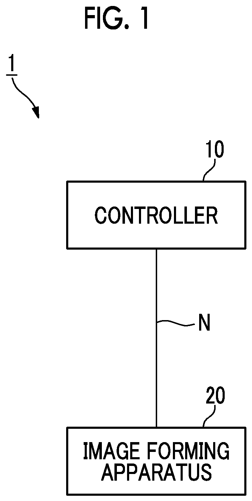

FIG. 1 is a diagram illustrating a configuration example of a printing system 1.

The printing system 1 shown in FIG. 1 includes a controller 10 and an image forming apparatus 20 connected through a signal path. The signal path uses, for example, Ethernet (registered trademark). The controller 10 is an example of an information processing system.

The controller 10 is a so-called computer. The controller 10 has a function of controlling generation of printed matter by the image forming apparatus 20 and a function of three-dimensionally displaying a preview of a color and texture of the printed matter generated from print data provided to the image forming apparatus 20. The printed matter in the present exemplary embodiment is an example of a simulation target.

The color and texture of the printed matter change depending on an orientation of the printed matter with respect to a light source and an observation position. Regions where a large amount of specularly reflected light enters the observation position exhibit strong glossiness. On the other hand, regions where a small amount of specularly reflected light enters the observation position exhibit less glossiness.

In the case of FIG. 1, the controller 10 and the image forming apparatus 20 are connected in a one-to-one relationship. It should be noted, however, that a plurality of image forming apparatuses 20 may be connected to one controller 10.

### <Hardware Configuration of Controller>

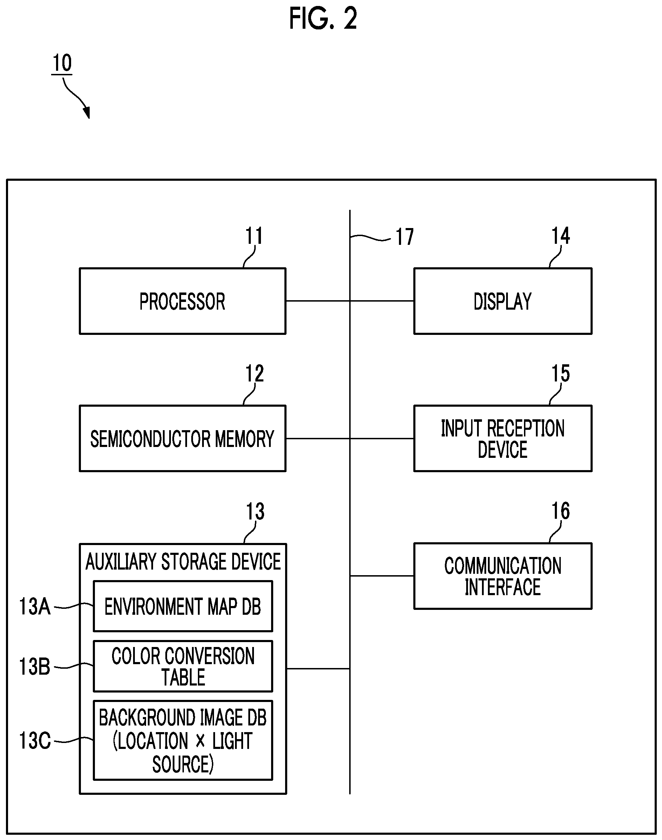

FIG. 2 is a diagram illustrating an example of a hardware configuration of the controller 10.

The controller 10 includes a processor 11, a semiconductor memory 12, an auxiliary storage device 13, a display 14, an input reception device 15, and a communication interface 16. The respective devices are connected via a bus or another signal line 17.

The processor 11 is a device that implements various functions through execution of a program.

The semiconductor memory 12 may include, for example, a read only memory (ROM) in which a unified extensible firmware interface (UEFI) or the like is stored, and a random access memory (RAM) used as a work area of the processor 11.

The processor 11 and the semiconductor memory 12 function as a so-called computer.

The auxiliary storage device 13 is configured with, for example, a hard disk device or a semiconductor storage. A program and various types of data are stored in the auxiliary storage device 13. The program is used as a general term for an operating system (OS) or an application program. The auxiliary storage device 13 stores a program for three-dimensionally reproducing, for example, the appearance of the color and texture of the printed matter. This program is a so-called simulation program. In the present exemplary embodiment, the printed matter generated by the simulation program is referred to as a simulation image.

The auxiliary storage device 13 shown in FIG. 2 includes, for example, an environment map database (DB) 13A, a color conversion table 13B, and a background image DB 13C.

The environment map DB 13A includes a plurality of environment maps having different observation environments. The environment map provides information on a light source used for environment mapping. Information on each pixel of the environment map provides a color and brightness (or a color temperature) of the light source. In other words, the environment map provides a position, a color, a shape, and a size of the light source.

The color conversion table 13B is, for example, a table that provides the appearance of colors according to a relationship between the position and color (or color temperature) of the light source, an observation direction, and an orientation of the printed matter. The observation direction is given by a position of a virtual camera in a simulation space. A preview of an image (that is, a simulation image) of the printed matter captured by the virtual camera is displayed on the display 14. Therefore, the observation direction matches a position of a user who observes the display 14.

The background image DB 13C is a sample image of a background. The sample image is prepared, for example, according to a combination of "name of location" and "information on light source". Candidate locations are given, for example, names of locations. The information on the light source includes, for example, a position, a color, a shape, and a size. The sample image is prepared, for example, for each combination of the candidate location and the position, color, shape, and size of the light source.

The display 14 may be, for example, a liquid crystal display or an organic electro luminescence (EL) display. A rendering image (hereinafter, also referred to as a "simulation image") the reproduces the appearance of the color or texture of the printed matter generated from the print data is displayed on the display 14.

The input reception device 15 is, for example, a device that receives an input from a mouse or an operation button. The input reception device 15 is used to provide an instruction to a program executed by the processor 11.

The communication interface 16 is an interface for communicating with the image forming apparatus 20. The communication interface 16 may be, for example, Ethernet.

### <Hardware Configuration of Image Forming Apparatus>

The image forming apparatus 20 includes a processor, a ROM, a RAM used as a work area of the processor, an auxiliary storage device, an image processing unit, a printing unit, and a communication interface. The respective devices are connected via a bus or another signal line. In addition, the image forming apparatus 20 is also provided with a mechanism for accommodating paper and a mechanism for transporting paper.

The processor controls an operation of each device through execution of a program including an OS or firmware, and outputs printed matter corresponding to the print data.

The auxiliary storage device is configured with, for example, a hard disk device or a semiconductor storage. The auxiliary storage device stores the print data received from the controller 10.

In a case where the print data is given as PDL data, the image processing unit executes a process of converting the PDL into bitmap data. This process is referred to as rasterization. The printing unit is a mechanism unit that forms an image on paper using, for example, an electrophotographic method or an inkjet method.

The communication interface is used for communication with the controller 10.

### <Functional Configuration of Controller>

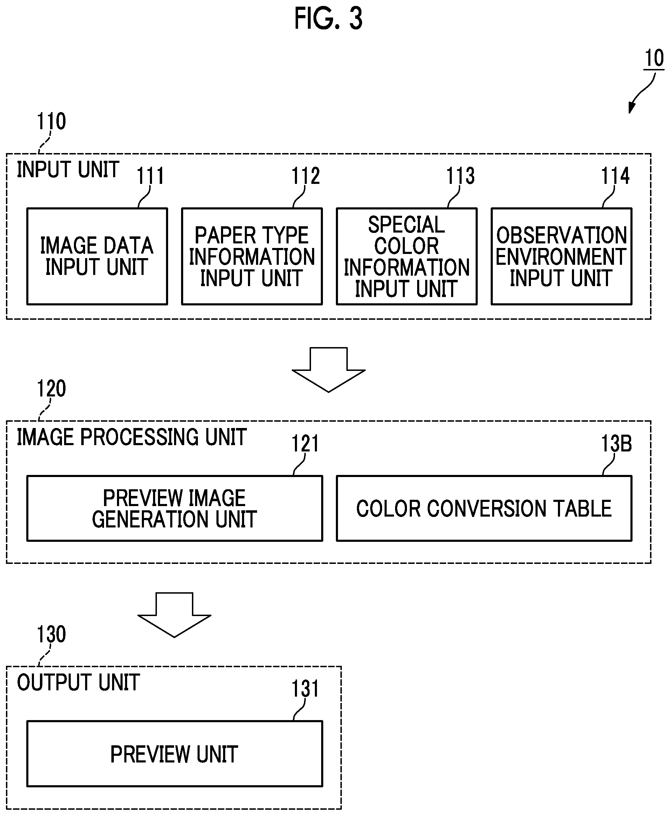

FIG. 3 is a diagram illustrating a functional configuration of the controller 10. In FIG. 3, parts corresponding to the parts in FIG. 2 are denoted by the same reference numerals.

Functional units shown in FIG. 3 are realized through execution of a program that reproduces the appearance of the color or texture of the printed matter.

The functional units of the controller 10 include an input unit 110, an image processing unit 120, and an output unit 130.

The input unit 110 is a functional unit that inputs a generation condition of the printed matter.

The input unit 110 includes an image data input unit 111, a paper type information input unit 112, a special color information input unit 113, and an observation environment input unit 114.

The image data input unit 111 is a functional unit that receives an input of image data. The image data includes, for example, print data including color information. In the present exemplary embodiment, the print data is assumed to be bitmap data.

The paper type information input unit 112 is a functional unit that receives an input of information regarding a type of a medium used for printing. In the present exemplary embodiment, paper is assumed as the medium.

The paper type includes, for example, information on cut paper, roll paper, and processed paper. In addition, the paper type includes, for example, information on a size or tint of the paper.

The special color information input unit 113 is a functional unit that receives an input of information regarding the special color.

The observation environment input unit 114 is a functional unit that receives an input of the observation environment. The observation environment is given, for example, by a combination of "light source information" and "background information".

The "light source information" includes, for example, a position of the light source, a color or color temperature of the light source, and a type of the light source. In the present exemplary embodiment, an illumination light source is assumed as the light source.

The "background information" includes, for example, a combination of a name of a location used as the background and a light source color or a color temperature. The "background information" may include a shape (for example, a surface, a line, or a point) of the light source.

The image processing unit 120 is a functional unit that generates a simulation image that reproduces the appearance of a color or texture in a case where the printed matter is observed in various directions.

The image processing unit 120 includes a preview image generation unit 121. The preview image generation unit 121 generates a simulation image with reference to the color conversion table 13B. In the present exemplary embodiment, the preview image generation unit 121 generates the simulation image as still image data. It should be noted, however, that the simulation image may be generated as moving image data.

The output unit 130 is a functional unit that outputs a preview image including the simulation image generated by the preview image generation unit 121. The output unit 130 includes a preview unit 131. The output unit 130 is a functional unit that displays the generated preview image on the display 14 (see FIG. 2). The preview unit 131 also has a function of outputting the generated simulation image or a preview image including the simulation image and the background image to the auxiliary storage device 13 (see FIG. 2).

### <Display Process of Preview Image>

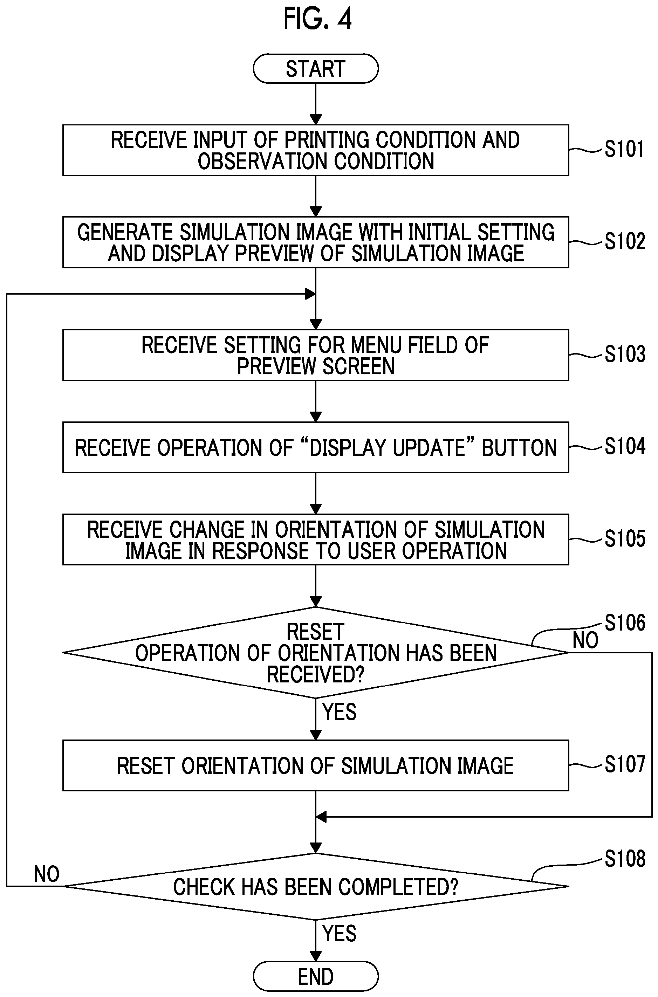

FIG. 4 is a diagram illustrating an example of a display process of a preview image. Reference letter S shown in FIG. 4 means a step.

First, the controller 10 (see FIG. 1) receives an input of printing conditions and observation conditions (step S101). The printing conditions here include various types of data and information received by the input unit 110 (see FIG. 3).

The printing conditions include, for example, image data, paper type, and special color information. The observation conditions include an observation environment of the printed matter.

Next, the controller 10 generates a simulation image with initial settings and displays a preview of the simulation image (step S102). The initial settings are given by the printing conditions and the observation conditions. In the case of the present exemplary embodiment, the observation conditions include, for example, an initial orientation of the printed matter. In the case of the present exemplary embodiment, the initial orientation is given as an orientation of facing a camera directly.

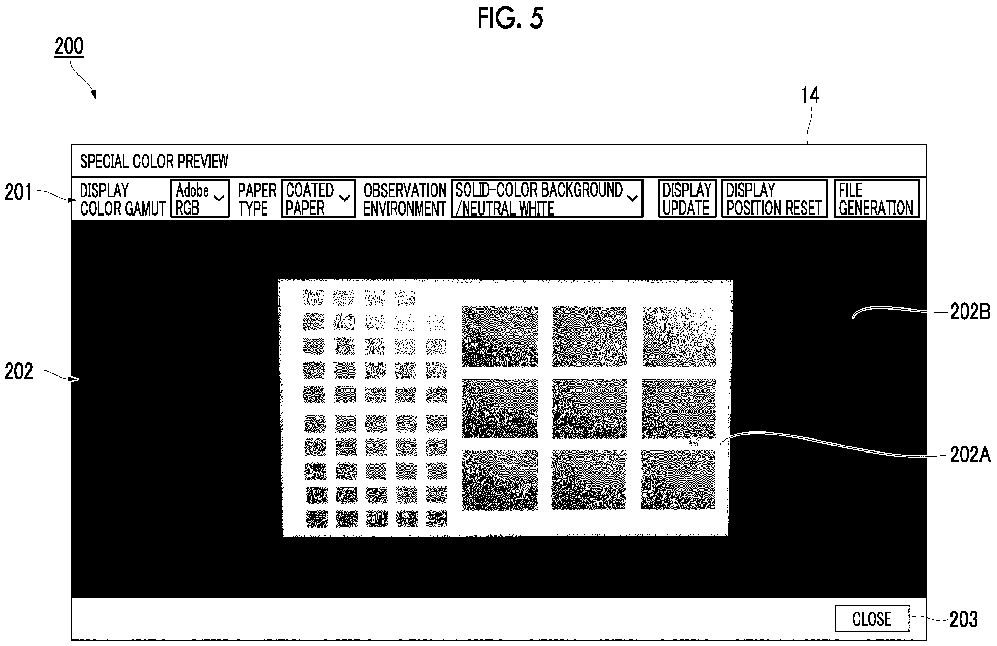

FIG. 5 is a diagram illustrating a display example of a simulation image based on an initial orientation.

A preview screen 200 includes a menu field 201, an image field 202, and a "close" button 203.

In the preview screen 200 shown in FIG. 5, "special color preview" is displayed as a title.

In the menu field 201, a "display color gamut" field, a "paper type" field, an "observation environment" field, a "display update" button, a "display position reset" button, and a "file generation" button are disposed.

The "display color gamut" field is used for designating a color gamut of a display.

The "paper type" field is used for designating paper of printed matter to be simulated.

The "observation environment" field is used for designating an environment for observing a simulation image. In other words, the observation environment is used for selecting an image (that is, a background image) to be displayed in a background of the simulation image.

The "display update" button is used for switching the display of the simulation image.

The "display position reset" button is used for resetting the orientation of the simulation image.

The "file generation" button is used for saving the simulation image. Not only the simulation image but also the image field 202 in which the simulation image is combined with the background image may be saved.

In the image field 202 shown in FIG. 5, a simulation image 202A of the printed matter generated using the environment map specified with the initial settings is displayed.

In a case of the simulation image 202A shown in FIG. 5, reflected light from the light source is observed in the vicinity of an upper right portion of the printed matter. A region where the influence of the reflected light is large is observed to be lighter than the actual tint. A background image 202B of the simulation image 202A according to the initial settings is solid black.

In a case where the "close" button 203 is operated, it is regarded that the observation of the simulation image 202A is completed, and the preview screen 200 is closed.

FIG. 4 will be referred to again.

The controller 10 (see FIG. 1) receives a selection for the menu field 201 (see FIG. 5) of the preview screen 200 (see FIG. 5) (step S103).

In the case of the present exemplary embodiment, the controller 10 receives selections for the display color gamut, the paper type, and the observation environment.

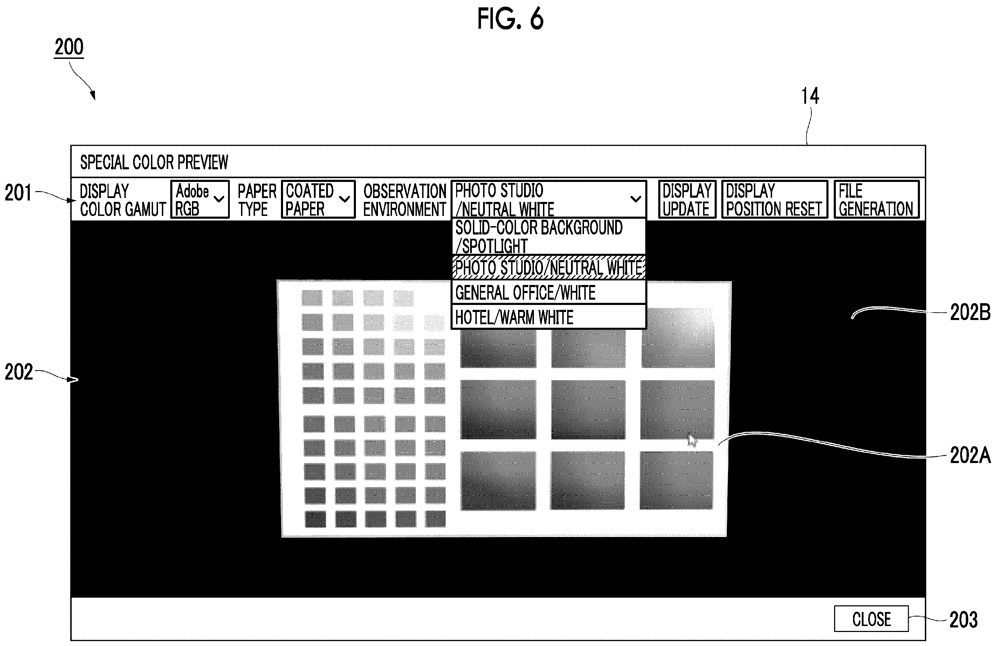

FIG. 6 is a diagram illustrating an example of options prepared in the observation environment.

The observation environment is basically given by a combination of "background information" and "light source information". The "background information" is an example of information on the background image. The "light source information" is an example of a light source for observation.

In the case of FIG. 6, the observation environment is four types of "solid-color background/spotlight", "photo studio/neutral white", "general office/white", and "hotel/warm white".

In the case of FIG. 6, "photo studio/neutral white" is selected by the user. Options corresponding to the four combinations are displayed by operating a pull-down button.

In the case of FIG. 6, the background information is four types of "solid-color background", "photo studio", "general office", and "hotel". These are examples and may include other candidate locations or may be replaced with other candidate locations. Incidentally, the "solid-color background" is not a specific location, but a background in a virtual space. FIG. 6 shows a case where the background is "solid black".

In the case of FIG. 6, the light source information is "spotlight", "neutral white", "white", and "warm white". The "spotlight" is a lighting device that illuminates a specific location at a pinpoint. In the case of FIG. 6, there is only one example in which the type of the lighting device is combined with the location information as the background information, but a fluorescent lamp, an LED light, a downlight, a chandelier, and other lighting devices may be combined with the location information.

Note that "neutral white", "white", and "warm white" are information on the color of the light source. In addition, the color of the light source may include "daylight color" and "warm neutral white". Instead of the color of the light source, a color temperature may be selectable. The "daylight color" corresponds to approximately 5700 K to 7100 K. The "neutral white" corresponds to approximately 4600 K to 5500 K. The "white" corresponds to approximately 3800 K to 4500 K. The "warm neutral white" corresponds to approximately 3250 K to 3800 K. The "warm white" corresponds to approximately 2600 K to 3250 K.

The tint of the printed matter, which is the simulation image, is determined by the color of the light source.

FIG. 4 will be referred to again.

The controller 10 (see FIG. 1) receives an operation of the "display update" button (step S104). As described above, the "display update" button is disposed in the menu field 201 (see FIG. 5). In a case where the operation of the "display update" button is received, the controller 10 updates the display of the image field 202 (see FIG. 5) in accordance with the conditions set in the menu field 201 (see FIG. 5).

Next, the controller 10 receives a change of an orientation of the simulation image 202A (see FIG. 5) in response to a user operation (step S105). For example, the orientation of the printed matter whose preview is displayed is changed in various directions.

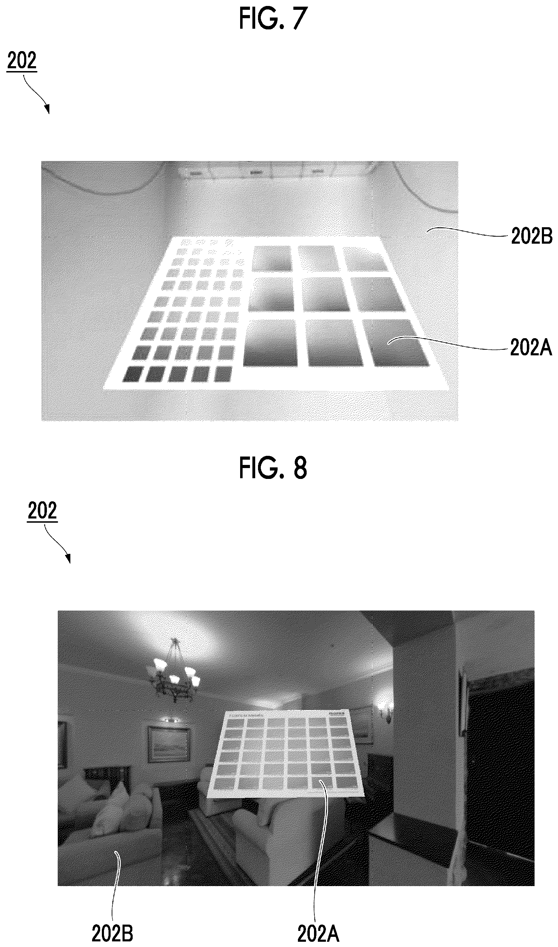

FIG. 7 is a diagram illustrating a display example of the image field 202 after the operation of the "display update" button. In FIG. 7, parts corresponding to the parts in FIG. 5 are designated by the same reference numerals.

The display example shown in FIG. 7 represents a case where the observation environment is designated as "photo studio/neutral white". In the case of FIG. 7, a simulation image 202A simulated with an environment map of "photo studio/neutral white" is combined with a background image 202B of a photo studio having a neutral white lighting fixture as a light source.

In the case of FIG. 7, the simulation image 202A is inclined such that light from the lighting fixture is obliquely incident onto a paper surface.

It is needless to say that glossiness appearing in the simulation image 202A differs depending on a difference in orientation, but the combination with the background image makes it easy to visualize the appearance in a real environment.

FIG. 8 is a diagram illustrating another display example of the image field 202 after the operation of the "display update" button. In FIG. 8, parts corresponding to the parts in FIG. 5 are designated by the same reference numerals.

The display example shown in FIG. 8 shows a case where the observation environment is designated as "hotel/warm white".

In the case of FIG. 8, a simulation image 202A simulated with an environment map of "hotel/warm white" is combined with a background image 202B of a hotel having a warm white lighting fixture as a light source.

In the case of FIG. 8 as well, the simulation image 202A is inclined such that light from the lighting fixture is obliquely incident onto a paper surface. Since not only the simulation image 202A but also the background image 202B are displayed, it is easy to visualize the appearance in the real environment.

FIG. 4 will be referred to again.

The controller 10 (see FIG. 1) determines whether or not the reset operation of the orientation has been received (step S106). Specifically, it is determined whether or not the "display position reset" button has been operated in the menu field 201 (see FIG. 5).

In a case where the reset operation of the orientation is received, a positive result is obtained in step S106. In this case, the controller 10 resets the orientation of the simulation image 202A (see FIG. 5) (step S107). Specifically, the orientation of the simulation image 202A returns to the orientation of facing the camera directly. Thereafter, the controller 10 proceeds to step S108.

On the other hand, in a case where the reset operation of the orientation is not received, a negative result is obtained in step S106. In this case, the controller 10 proceeds to step S108.

The controller 10 that has proceeded to step S108 determines whether or not the check has been completed. Specifically, it is determined whether or not the "close" button 203 (see FIG. 5) has been operated.

In a case where the check is not completed, a negative result is obtained in step S108. In this case, the controller 10 returns to step S103 and receives a further operation.

The controller 10 may be configured to, in a case where only a further change in the orientation of the simulation image 202A is received, return to step S105.

In a case where the check is completed, a positive result is obtained in step S108. In this case, the controller 10 ends the preview operation.

### <Background Image corresponding to Observation Environment>

In a case where one background image is stored in the background image DB 13C for one option prepared in the observation environment, the background image 202B (see FIG. 7) associated with the option need only be combined with the simulation image 202A (see FIG. 7) and displayed.

Hereinafter, a selection method in a case where a plurality of background images satisfying the observation environment are present in the background image DB 13C (see FIG. 2) will be described.

In the present exemplary embodiment, the controller 10 (see FIG. 1) acquires a background image having a color temperature equivalent to the color temperature of the environment map.

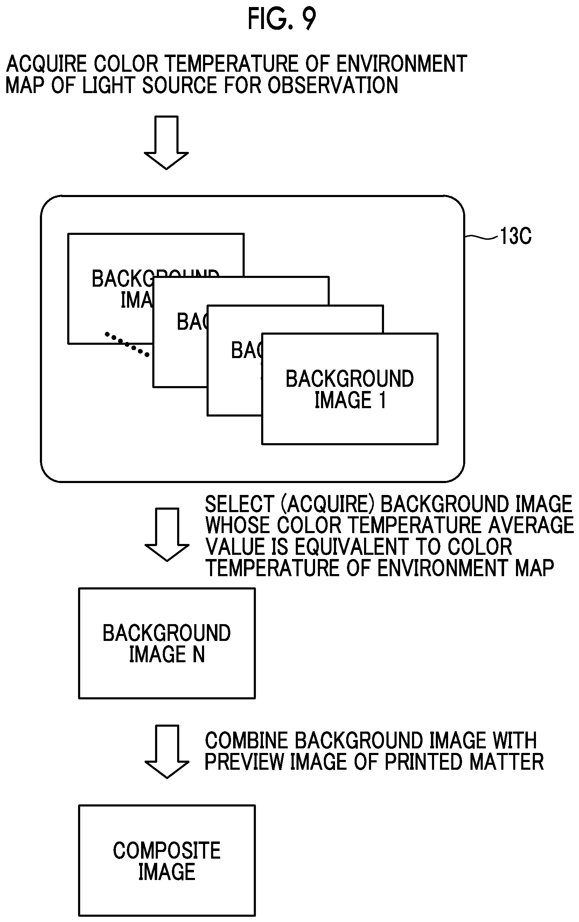

FIG. 9 is a diagram illustrating an outline of a method of acquiring the background image.

First, the controller 10 acquires a color temperature of the environment map of the light source for observation.

The information on the light source for observation is determined by, for example, "light source information" of the observation environment selected by the user. For example, in the case of FIG. 6, the light source for observation is any one of "spotlight", "neutral white", "white", or "warm white".

In the environment map DB 13A (see FIG. 2) used in the present exemplary embodiment, one environment map corresponding to "spotlight", one environment map corresponding to "neutral white", one environment map corresponding to "white", and one environment map corresponding to "warm white" are stored. It should be noted, however, that a plurality of environment maps may be prepared for one light source, and the user may be able to select the environment map to be used.

On the other hand, a plurality of backgrounds corresponding to a combination of a background and a light source corresponding to the observation environment are stored in the background image DB 13C (see FIG. 2).

In the present exemplary embodiment, a background image whose color temperature average value is equivalent to the color temperature of the environment map is selected and combined with the simulation image 202A (see FIG. 7) of the printed matter. In FIG. 9, the image after the combination is referred to as a "composite image".

In the following, various techniques for selecting a background image having a color temperature equivalent to the color temperature of the environment map will be described.

### <Example 1>

As the method of selecting the background image, a method of determining the color temperature of the environment map by a color temperature of a main light source included in the environment map is available. The light sources included in the environment map are not necessarily limited to one. Therefore, the color temperature of the main light source is regarded as the color temperature of the environment map.

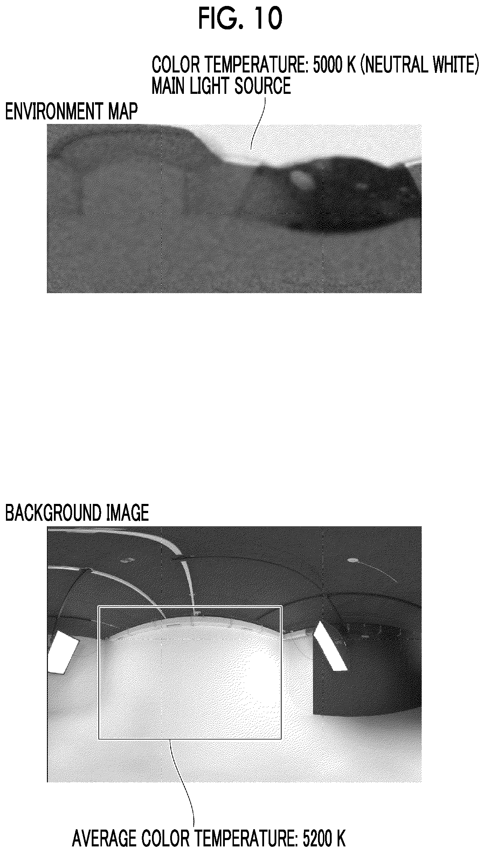

FIG. 10 is a diagram illustrating a method of determining a background image in a case where the color temperature of the environment map is set to the color temperature of the main light source.

In the case of the environment map shown in FIG. 10, one light source is present in an upper right portion. This light source is the main light source. In the case of FIG. 10, the color temperature of the main light source in the environment map is 5000 K. The color temperature of the main light source may be determined as an average color temperature of the main light source or may be determined as a maximum color temperature. This color temperature corresponds to neutral white.

In FIG. 10, as the background image having a color temperature equivalent to the color temperature of the main light source of the environment map, a background image of a photo studio in which the average color temperature of the main light source is 5200 K is selected. The photo studio is selected as the "name of location" in the observation environment.

Not only is 5200 K close to 5000 K, which is the color temperature of the main light source in the environment map, but it is also classified as "neutral white", which is the same as the main light source in the environment map. Therefore, the image shown in FIG. 10 is selected as the background image.

The range regarded as approximate may be determined, for example, based on whether or not the classification of the light source color is the same, or may be determined based on whether or not a difference in color temperature is equal to or less than a threshold value (for example, 300 K).

The color temperature of the background image may be the average color temperature of the entire background image, rather than the average color temperature of the main light source.

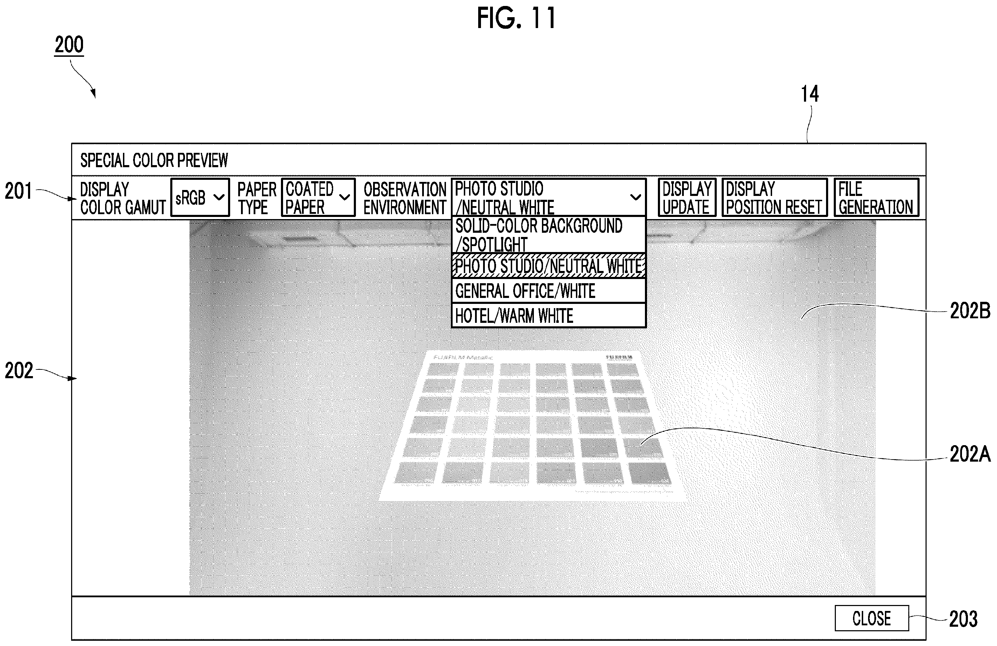

FIG. 11 is a diagram illustrating a display example of a preview screen 200 in which a simulation image of the printed matter is combined with a background image. In FIG. 11, parts corresponding to the parts in FIG. 5 are designated by the same reference numerals.

In the case of FIG. 11, an image of a "photo studio" selected as the observation environment is displayed as the background image of the simulation image 202A.

### <Example 2>

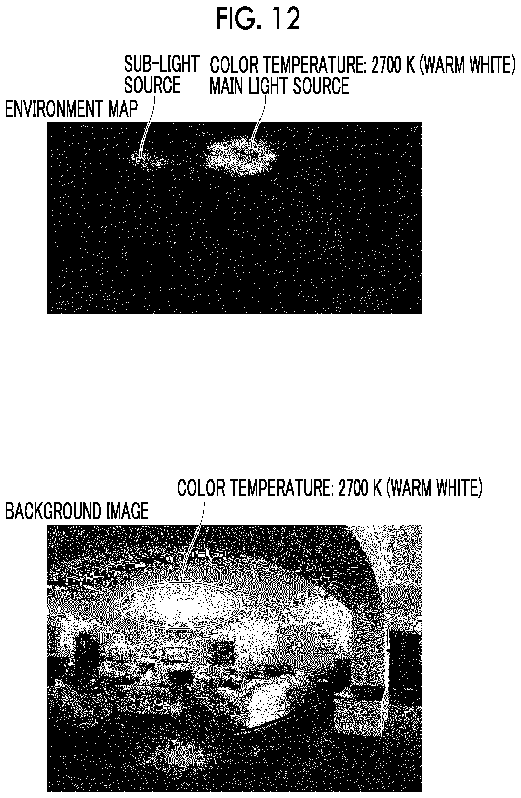

FIG. 12 is a diagram illustrating a method of determining a color temperature in a case where a plurality of light sources are present in the environment map. In the environment map in FIG. 12, two light sources are present near a ceiling. In FIG. 12, the brighter one is referred to as a main light source, and the darker one is referred to as a sub-light source.

In the case of FIG. 12, the color temperature of the main light source in the environment map is 2700 K. Note that 2700 K corresponds to warm white.

In FIG. 12, a background image of a hotel in which the color temperature of the main light source is 2700 K is selected. The hotel is selected as the "name of location" in the observation environment.

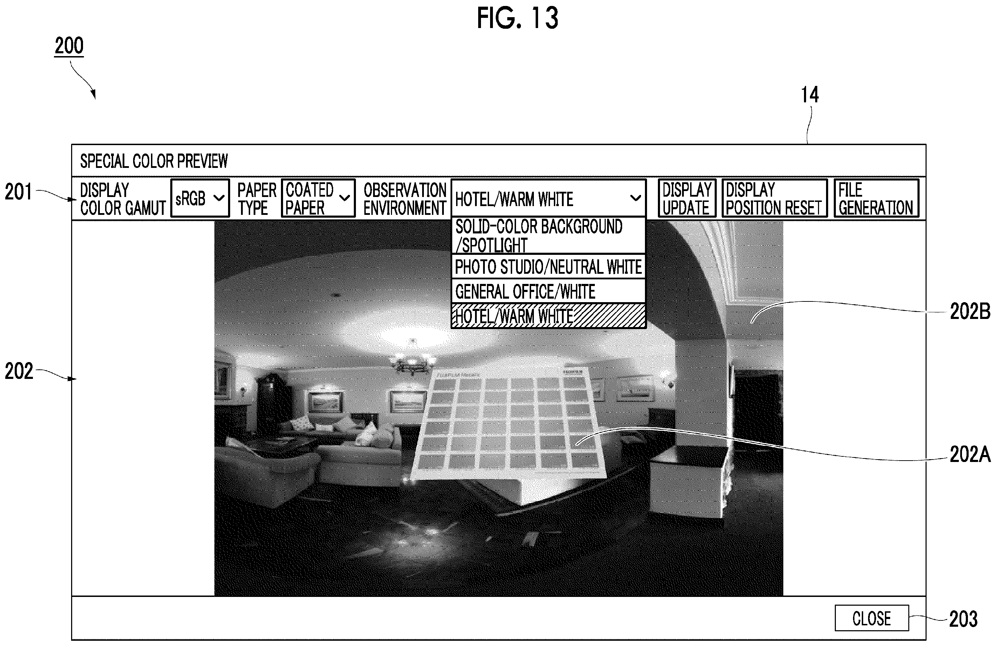

FIG. 13 is a diagram illustrating another display example of a preview screen 200 in which a simulation image of the printed matter is combined with a background image. In FIG. 13, parts corresponding to the parts in FIG. 5 are designated by the same reference numerals.

In the case of FIG. 13, an image of a "hotel" selected as the observation environment is displayed as the background image of the simulation image 202A. It is easier to visualize the appearance in the real environment than in a case where only the simulation image 202A is displayed in front of the solid-color background.

### <Example 3>

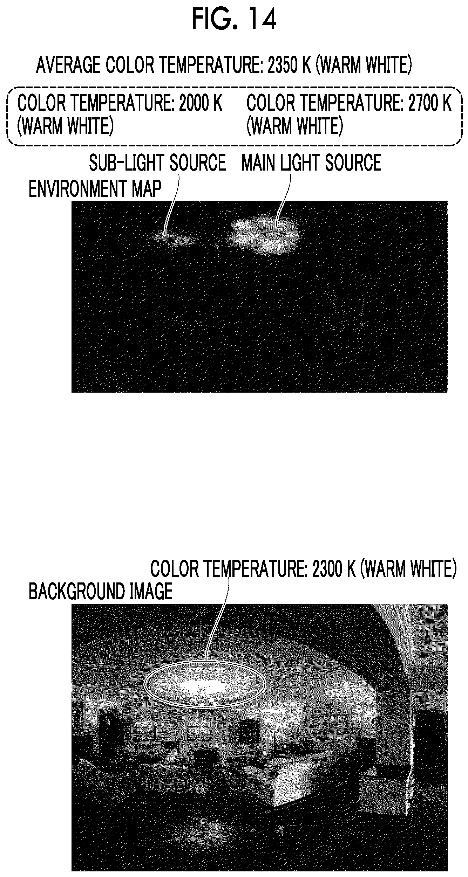

FIG. 14 is a diagram illustrating another method of determining a color temperature in a case where a plurality of light sources are present in the environment map. In the case of FIG. 14 as well, two light sources are present near a ceiling in the environment map.

In the case of FIG. 14, an average color temperature of the color temperature of the main light source and the color temperature of the sub-light source is set as the color temperature of the environment map. In the case of FIG. 14, the color temperature of the main light source is 2700 K, while the color temperature of the sub-light source is 2000 K. Therefore, the average color temperature in the environment map is calculated as 2350 K.

In FIG. 14, a background image of a hotel in which the color temperature of the main light source is 2300 K is selected.

### <Example 4>

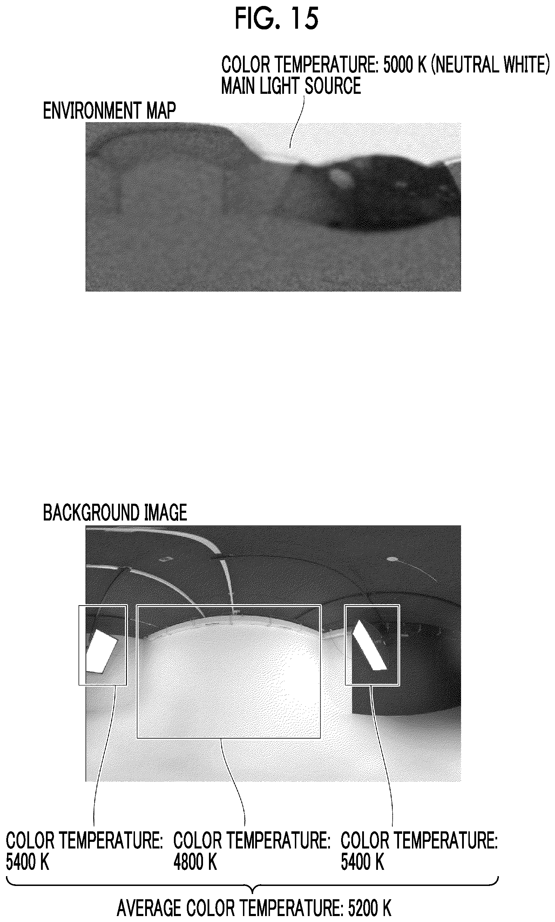

FIG. 15 is a diagram illustrating a method of determining a color temperature of a background image based on an average color temperature of a plurality of light sources included in the background image. The environment map shown in FIG. 15 is the same as the environment map shown in FIG. 10. Therefore, the color temperature of the environment map is determined by the color temperature of the main light source.

Note that, in the case of FIG. 15, an average color temperature of three light sources included in the background image is set as the color temperature of the background image. In the case of FIG. 15, an average brightness temperature of the three light sources included in the background image is 5200 K.

Not only is 5200 K close to 5000 K, which is the color temperature of the main light source in the environment map, but it is also classified as the same neutral white. Therefore, the image shown in FIG. 15 is selected as the background image.

By selecting the background image in which the average color temperature of the main light source in the background image is close to the color temperature of the main light source in the environment map, it is possible to observe the simulation image 202A (see FIG. 7) in an illumination environment close to the environment map.

### <Example 5>

**In** Examples 1 to 4 described above, a background image having a color temperature equivalent to the color temperature of the environment map is selected.

In this example, a background image is further selected in which the shape of at least one light source reflected behind the simulation image 202A (see FIG. 7) is the same as the shape of the light source in the environment map. As a result, it is possible to reduce the sense of incompatibility between the glossiness appearing in the simulation image 202A and the background image.

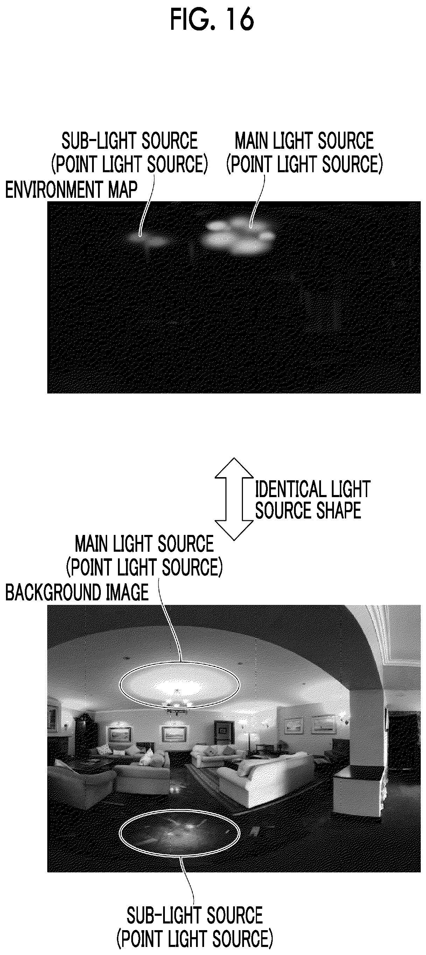

FIG. 16 is a diagram illustrating another method of determining a color temperature in a case where a plurality of light sources are present in the environment map. In the case of FIG. 16 as well, two light sources are present near a ceiling in the environment map. In the case of FIG. 16, both of the two light sources are a collection of point light sources.

Therefore, an image that includes not only a color temperature but also a point light source is selected for the background image. In the case of FIG. 16, the main light source reflected on the ceiling side of the background image and the sub-light source reflected on the floor surface side are both point light sources.

Therefore, by selecting a background image that includes at least one light source having the same shape as the light source in the environment map, it becomes easier to check the appearance of the real space. The shapes are not limited to the same, but may be similar.

### <Summary>

As described above, the simulation image of the printed matter is combined with a background image having a color temperature equivalent to the color temperature of the light source in the environment map used for generating the simulation image, and is displayed as a preview. As a result, it is possible to make the appearance of the simulation image closer to the appearance of the real space.

### <Other Exemplary Embodiments>

(1) Although the exemplary embodiments of the present invention have been described above, a technical scope of the present invention is not limited to the scope described in the above-mentioned exemplary embodiments. It is apparent from claims that exemplary embodiments in which various modifications or improvements are added to the above-mentioned exemplary embodiments are also included in the technical scope of the present invention.
(2) In the case of FIG. 6, the observation environment is designated by a combination of "name of location" and "color of light source" as a background.

However, the observation environment may be designated by another method.

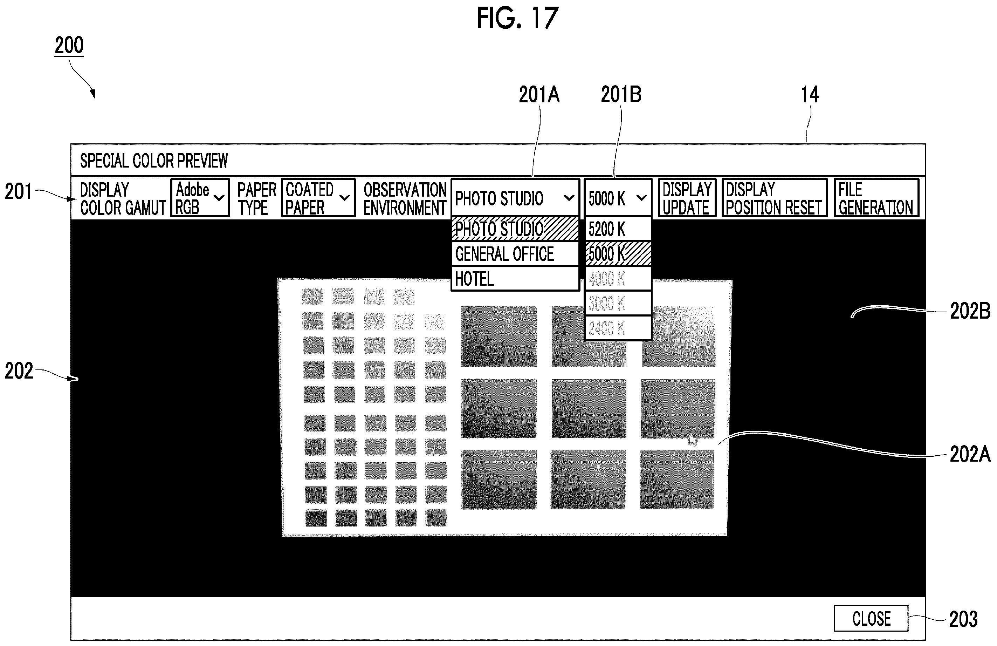

FIG. 17 is a diagram illustrating an example in which a selection field 201A for "name of location" and a selection field 201B for "color temperature of light source" are separately prepared. In FIG. 17, parts corresponding to the parts in FIG. 6 are designated by the same reference numerals.

In the case of FIG. 17, "photo studio", "general office", and "hotel" are displayed in a selectable manner in the selection field 201A for "name of location". The user can select one from these.

In addition, 5200 K, 5000 K, 4000 K, 3000 K, and 2400 K are displayed in a selectable manner in the selection field 201B for "color temperature of light source". The user can select one from these.

Therefore, the user can designate "photo studio" having a light source with a color temperature of 5200 K as the observation environment, or "photo studio" having a light source with a color temperature of 5000 K as the observation environment. Incidentally, 5200 K and 5000 K are examples of color temperatures associated with a name of a location, "photo studio".

By the way, a background image of a photo studio having light sources of 4000 K, 3000 K, and 2400 K is not prepared. Therefore, in the selection field 201B for the color temperature, three options 4000 K, 3000 K, and 2400 K are displayed in a grayed-out manner. The grayed-out display is an example of a non-selectable mode.

Instead of the grayed-out display, a display method of not displaying these three color temperatures may also be employed. That is, a mechanism may be employed in which, in a case where the "photo studio" is first selected by the user, only two color temperatures of 5200 K and 5000 K are displayed as selectable color temperatures, and other color temperatures are not displayed on the screen.

On the contrary, in a case where the "color temperature of light source" is designated by the user before the "name of location" used as the background, a method may be employed in which a location that does not have the light source having the designated color temperature is displayed in a grayed-out manner in the selection field 201A or is not displayed as an option.

(3) In the case of FIG. 6, the observation environment can be selected by a combination of "name of location" and "color of light source" as a background.

However, the options for the observation environment may further include a shape of the light source.

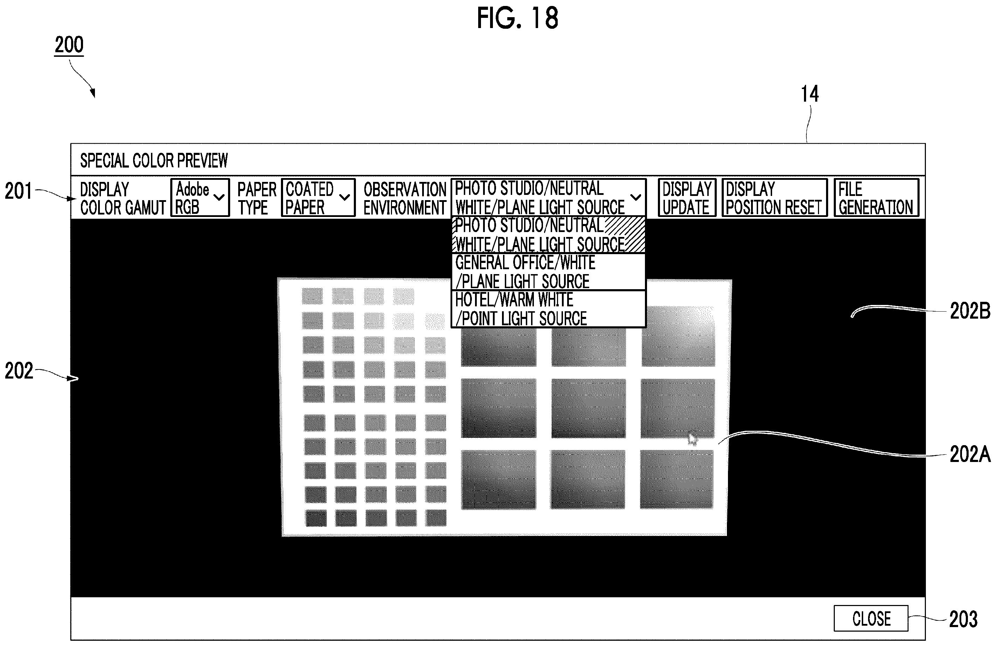

FIG. 18 is a diagram illustrating a display example of options in which "name of location", "color of light source", and "shape of light source" are combined. In FIG. 18, parts corresponding to the parts in FIG. 6 are designated by the same reference numerals.

In the case of FIG. 18, three options of "photo studio/neutral white/plane light source", "general office/white/line light source", and "hotel/warm white/point light source" are displayed.

It should be noted, however, that the three options shown in FIG. 18 are examples, and other combinations may be included. For example, "photo studio/daylight color/line light source" or "photo studio/warm white/point light source" may be included in the options.

In addition, in FIG. 18, the options in which the "name of location", the "color of light source", and the "shape of light source" are combined are illustrated, but the options may be given by at least one of these. For example, an option of only the "name of location" may be prepared, an option of only the "color of light source" may be prepared, or an option of only the "shape of light source" may be prepared.

In addition, the combination of the options may include a combination of the "name of location" and the "shape of light source" and a combination of the "color of light source" and the "shape of light source".

The combination of the options may include a position and a size of the light source. The position of the light source may include, for example, a ceiling, a wall, and a floor. The size of the light source may be designated, for example, in terms of vertical and horizontal dimensions. For example, even in a case of a plane light source, a background image having a light source of 5 cm × 5 cm and a background image having a light source of 100 cm × 200 cm may give different impressions to the user.

(4) In the above-described exemplary embodiments, the printing system 1 (see FIG. 1) in which the controller 10 (see FIG. 1) and the image forming apparatus 20 (see FIG. 1) are provided independently has been described.

However, the controller 10 may be realized as a part of the image forming apparatus 20.

In addition, the controller 10 may be realized as a so-called cloud server or the like.

(5) In the exemplary embodiments, the processes are performed by any computer. The computer may perform the processes by using a processor serving as hardware, a program serving as software, or combination of these.

In this case, the processor is configured to perform the processes in the exemplary embodiments in cooperation with the program and may function as a unit or a means in the exemplary embodiments.

The order in which the processor performs the processes is not limited to the described order and may be changed appropriately. The computer may be a general-purpose computer, an application specific computer, a workstation, or another system capable of performing the processes.

The processor may be composed of one or more pieces of hardware, and the type of the hardware is not limited. For example, the processor may be composed of hardware such as a central processing unit (CPU), a micro processing unit (MPU), a programmable logic device such as a field programmable gate array (FPGA), a dedicated circuit for performing specific processing such as an application specific integrated circuit (ASIC), a graphics processing unit (GPU), or a neural processing unit (NPU).

Regarding the type of the hardware, different types of hardware may be combined. If multiple pieces of hardware are configured to perform one or more processes of the processor, the multiple pieces of hardware may be present in apparatuses physically away from each other or may be present in one apparatus. In each of exemplary embodiments, the order in which the processor performs the processes is not limited to the order described above and may be changed appropriately. The hardware is composed of electric circuitry in which circuit elements such as semiconductor devices are combined, or the like.

Further, the program may be software such as firmware or microcode. The program may be, for example, a program module group, and the functions thereof may be implemented by processors configured to implement the respective functions. The program may be program code or multiple code segments stored in one or more non-transitory computer readable media (for example, a storage medium or another storage).

The program may be stored in such a divided manner in multiple non-transitory computer readable media present in apparatuses physically away from each other. The program code or the code segments may represent a procedure, a function, a sub program, a routine, a subroutine, a module, a software package, a class or any combination of instructions, data structures, or program statements. The program code or the code segment may be connected to another code segment or a hardware circuit by transmitting and/or receiving information, data, an argument, a parameter, or memory content.

(6) The present invention can also be applied to a program and a program product.

### <Supplementary Note>

(((1))) An information processing system comprising:
   a processor configured to:
   execute control of receiving a designation of a light source for observation;
   execute control of acquiring an environment map of the light source;
   execute control of acquiring a background image having a color temperature equivalent to a color temperature of the environment map;
   execute control of generating a simulation image that reproduces appearance of printed matter using the acquired environment map; and
   execute control of displaying the simulation image by combining the simulation image with the background image.
(((2))) The information processing system according to (((1))), wherein the processor is configured to:
   acquire, as the background image, an image having a color temperature equivalent to a color temperature of a main light source of the environment map.
(((3))) The information processing system according to (((2))), wherein the processor is configured to:
   execute control of determining a light source having maximum brightness in the environment map as the main light source.
(((4))) The information processing system according to (((2))), wherein the processor is configured to:
   execute control of determining an average color temperature of a plurality of light sources included in the environment map as a color temperature of the light source.
(((5))) The information processing system according to any one of (((1))) to (((4))), wherein the processor is configured to:
   execute control of determining the color temperature of the background image based on an average color temperature of a main light source included in the background image.
(((6))) The information processing system according to any one of (((1))) to (((5))), wherein the processor is configured to:
   execute control of determining the color temperature of the background image based on an average color temperature of a plurality of light sources included in the background image.
(((7))) The information processing system according to any one of (((1))) to (((6))), wherein the processor is configured to:
   acquire, as the background image, an image having a color temperature of approximately 5700 K to 7100 K in a case where daylight color is designated for the light source;
   acquire, as the background image, an image having a color temperature of approximately 4600 K to 5500 K in a case where neutral white is designated for the light source;
   acquire, as the background image, an image having a color temperature of approximately 3800 K to 4500 K in a case where white is designated for the light source;
   acquire, as the background image, an image having a color temperature of approximately 3250 K to 3800 K in a case where warm neutral white is designated for the light source; and
   acquire, as the background image, an image having a color temperature of approximately 2600 K to 3250 K in a case where warm white is designated for the light source.
(((8))) The information processing system according to any one of (((1))) to (((7))), wherein the processor is configured to:
   acquire, as the background image, an image in which a shape of at least one light source that is reflected behind the printed matter is similar to a shape of the light source in the environment map.
(((9))) The information processing system according to any one of (((1))) to (((8))), wherein the processor is configured to:
   execute control of displaying options in which the light source for observation and the background image are combined.
(((10))) The information processing system according to (((9))),
   wherein the options include at least one of a color temperature of the light source for observation, a shape of the light source, or a name of a location of a background.
(((11))) The information processing system according to any one of (((1))) to (((10))), wherein the processor is configured to:
   receive a designation of a name of a location of the background image, in addition to the designation of the light source for observation.
(((12))) The information processing system according to (((11))), wherein the processor is configured to:
   in a case of receiving a designation of the background image by selecting the name of the location, execute control of not displaying a color temperature different from a color temperature associated with the name of the location as an option or displaying the color temperature in a non-selectable mode.
(((13))) A program for causing a computer to implement:
   a function of receiving a designation of a light source for observation;
   a function of acquiring an environment map of the light source;
   a function of acquiring a background image having a color temperature equivalent to a color temperature of the environment map;
   a function of generating a simulation image that reproduces appearance of printed matter using the acquired environment map; and
   a function of displaying the simulation image by combining the simulation image with the background image.

With the information processing system according to (((1))), it is possible to make appearance of a simulation image that reproduces appearance of printed matter closer to appearance of a real environment as compared to a case of generating the simulation image using only light source information of a space to be observed.

With the information processing system according to (((2))), it is possible to make the appearance of the simulation image closer to reality even in a case where the environment map includes a plurality of light sources.

With the information processing system according to (((3))), it is possible to make the appearance of the simulation image closer to the appearance in reality.

With the information processing system according to (((4))), it is possible to make the appearance of the simulation image closer to the appearance in reality.

With the information processing system according to (((5))), it is possible to make the appearance of the simulation image closer to the appearance in reality.

With the information processing system according to (((6))), it is possible to make the appearance of the simulation image closer to the appearance in reality.

With the information processing system according to (((7))), it is possible to make the observation environment of the simulation image closer to a real space.

With the information processing system according to (((8))), it is possible to eliminate inconsistency between a shape of the light source and a shape of the light source appearing in the background image.

With the information processing system according to (((9))), it is possible to designate an observation environment in which the light source and the background image are combined.

With the information processing system according to (((10))), it is possible to designate the observation environment in detail before the execution of the simulation.

With the information processing system according to (((11))), it is possible to designate the observation environment in detail before the execution of the simulation.

With the information processing system according to (((12))), it is possible to prevent erroneous designation in advance.

With the program according to (((13))), it is possible to make appearance of a simulation image that reproduces appearance of printed matter closer to appearance of a real environment as compared to a case of generating the simulation image using only light source information of a space to be observed.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

1: printing system
10: controller
11: processor
12: semiconductor memory
13: auxiliary storage device
13A: environment map DB
13B: color conversion table
13C: background image DB
14: display
15: input reception device
16: communication interface
17: signal line
20: image forming apparatus
110: input unit
111: image data input unit
112: paper type information input unit
113: special color information input unit
114: observation environment input unit
120: image processing unit
121: preview image generation unit
130: output unit
131: preview unit

## Claims

1. An information processing system comprising:
a processor configured to:
execute control of receiving a designation of a light source for observation;
execute control of acquiring an environment map of the light source;
execute control of acquiring a background image having a color temperature equivalent to a color temperature of the environment map;
execute control of generating a simulation image that reproduces appearance of printed matter using the acquired environment map; and
execute control of displaying the simulation image by combining the simulation image with the background image.

2. The information processing system according to claim 1, wherein the processor is configured to:
acquire, as the background image, an image having a color temperature equivalent to a color temperature of a main light source of the environment map.

3. The information processing system according to claim 2, wherein the processor is configured to:
execute control of determining a light source having maximum brightness in the environment map as the main light source.

4. The information processing system according to claim 2, wherein the processor is configured to:
execute control of determining an average color temperature of a plurality of light sources included in the environment map as a color temperature of the light source.

5. The information processing system according to any one of claims 1 to 4, wherein the processor is configured to:
execute control of determining the color temperature of the background image based on an average color temperature of a main light source included in the background image.

6. The information processing system according to any one of claims 1 to 5, wherein the processor is configured to:
execute control of determining the color temperature of the background image based on an average color temperature of a plurality of light sources included in the background image.

7. The information processing system according to any one of claims 1 to 6, wherein the processor is configured to:
acquire, as the background image, an image having a color temperature of approximately 5700 K to 7100 K in a case where daylight color is designated for the light source;
acquire, as the background image, an image having a color temperature of approximately 4600 K to 5500 K in a case where neutral white is designated for the light source;
acquire, as the background image, an image having a color temperature of approximately 3800 K to 4500 K in a case where white is designated for the light source;
acquire, as the background image, an image having a color temperature of approximately 3250 K to 3800 K in a case where warm neutral white is designated for the light source; and
acquire, as the background image, an image having a color temperature of approximately 2600 K to 3250 K in a case where warm white is designated for the light source.

8. The information processing system according to any one of claims 1 to 7, wherein the processor is configured to:
acquire, as the background image, an image in which a shape of at least one light source that is reflected behind the printed matter is similar to a shape of the light source in the environment map.

9. The information processing system according to any one of claims 1 to 8, wherein the processor is configured to:
execute control of displaying options in which the light source for observation and the background image are combined.

10. The information processing system according to claim 9,
wherein the options include at least one of a color temperature of the light source for observation, a shape of the light source, or a name of a location of a background.

11. The information processing system according to any one of claims 1 to 10, wherein the processor is configured to:
receive a designation of a name of a location of the background image, in addition to the designation of the light source for observation.

12. The information processing system according to claim 11, wherein the processor is configured to:
in a case of receiving a designation of the background image by selecting the name of the location, execute control of not displaying a color temperature different from a color temperature associated with the name of the location as an option or displaying the color temperature in a non-selectable mode.

13. A program for causing a computer to implement:
a function of receiving a designation of a light source for observation;
a function of acquiring an environment map of the light source;
a function of acquiring a background image having a color temperature equivalent to a color temperature of the environment map;
a function of generating a simulation image that reproduces appearance of printed matter using the acquired environment map; and
a function of displaying the simulation image by combining the simulation image with the background image.

14. An information processing method comprising:
receiving a designation of a light source for observation;
acquiring an environment map of the light source;
acquiring a background image having a color temperature equivalent to a color temperature of the environment map;
generating a simulation image that reproduces appearance of printed matter using the acquired environment map; and
displaying the simulation image by combining the simulation image with the background image.
